# EUROPEAN PATENT APPLICATION

(11) **EP 4 694 184 A1**
(43) Date of publication of application: **11.02.2026**
(21) Application number: 24843257.7
(22) Date of filing: 09.05.2024
(51) Int. Cl.: H04R 1/02, H04R 1/28, H04R 7/16, G06F 1/16

(54) **SPEAKER MODULE AND ELECTRONIC DEVICE COMPRISING SPEAKER MODULE**

(30) Priority: 14.07.2023 KR 20230091459; 22.08.2023 KR 20230110099
(71) Applicant: Samsung Electronics Co., Ltd., Suwon-si, Gyeonggi-do 16677 (KR)
(72) Inventor: PARK, Seonguk, Suwon-si, Gyeonggi-do 16677 (KR); KANG, Haewoong, Suwon-si, Gyeonggi-do 16677 (KR); KO, Junho, Suwon-si, Gyeonggi-do 16677 (KR); AN, Youngjun, Suwon-si, Gyeonggi-do 16677 (KR); KANG, Kyungmoon, Suwon-si, Gyeonggi-do 16677 (KR); KANG, Taeuk, Suwon-si, Gyeonggi-do 16677 (KR); KIM, Jeongseob, Suwon-si, Gyeonggi-do 16677 (KR)
(74) Representative: Gulde & Partner
(86) International application number: PCT/KR2024/006276
(87) International publication number: WO 2025/018534

(57) **Abstract**

An electronic device according to various embodiments of the present invention comprises: a housing including a front plate, a rear plate facing the opposite direction of the front plate, and a side member, which surrounds the space between the front plate and the rear plate and includes a speaker hole; a display disposed in a first direction of the housing; and a speaker module disposed inside the housing so as to correspond to the speaker hole, wherein the speaker module includes: a first plate disposed in a second direction opposite to the display; a speaker disposed in the second direction of the first plate; a diaphragm disposed in the second direction of the speaker; a second plate spaced apart from the diaphragm and disposed in the first direction of the rear plate; and an acoustic emission port formed between the diaphragm and the second plate, the second plate includes: a first portion having a first distance from the diaphragm; and a second portion having a second distance from the diaphragm, and the first portion can be thinner than the second portion.

## Description

### [Technical Field]

Various embodiments of the disclosure disclose a speaker module and an electronic device including the speaker module.

### [Background Art]

The use of portable electronic devices such as tablet PCs or smartphones is increasing, and modules performing various functions are being provided in the electronic devices.

For example, the electronic devices may include at least one speaker module to output various sounds to a user.

The speaker module may output sound signals audible to the user by converting electrical signals generated in the electronic device into sound signals using vibration of a diaphragm.

### [Disclosure of Invention]

### [Technical Problem]

A speaker module included in an electronic device may have an acoustic outlet formed between a diaphragm and a plate.

When moisture is infiltrated into the acoustic outlet of the speaker module, acoustic output of the speaker module may be degraded.

When the plate facing the diaphragm of the speaker module is formed to have a uniform thickness, there may be a limitation in discharging and removing the moisture that has flowed into the acoustic outlet between the diaphragm and the plate.

Various embodiments of the disclosure may provide a speaker module and an electronic device including the speaker module, which may smoothly discharge and remove the moisture introduced into the acoustic outlet by forming a portion of the plate facing at least a portion of the diaphragm to have a reduced thickness and expanding a space between the diaphragm and the plate.

The technical problems to be addressed by this disclosure are not limited to those described above, and other technical problems not mentioned above may be clearly understood by a person ordinarily skilled in the related art to which the disclosure pertains.

### [Solution to Problem]

According to an embodiment of the disclosure, an electronic device may include a housing including a front surface plate, a rear surface plate facing away from the front surface plate, and a side surface member surrounding a space between the front surface plate and the rear surface plate and including a speaker hole, a display disposed in the first direction of the housing, and a speaker module disposed inside the housing to correspond to the speaker hole. According to an embodiment, the speaker module may include a first plate disposed in a second direction opposite to the first direction of the display, a speaker disposed in the second direction of the first plate, a diaphragm disposed in the second direction of the speaker, a second plate spaced apart from the diaphragm and disposed in the first direction of the rear surface plate, and an acoustic outlet formed between the diaphragm and the second plate. According to an embodiment, the second plate may include a first portion having a first gap from the diaphragm and a second portion having a second gap from the diaphragm. The first portion may be configured to have a smaller thickness than the second portion.

### [Advantageous Effects of Invention]

According to various embodiments of the disclosure, by forming a portion of a plate facing a diaphragm to have a reduced thickness and thereby forming a wider gap between the diaphragm and the plate, moisture introduced into an acoustic outlet of a speaker module (e.g., an acoustic output module) may be smoothly discharged and removed.

In addition, various effects directly or indirectly understood through this document may be provided.

### [Brief Description of Drawings]

In connection with the description of the drawings, the same or similar components may be denoted by the same or similar reference numerals.
FIG. 1 is a block diagram of an electronic device in a network environment, according to various embodiments of the disclosure.
FIG. 2A is a perspective view schematically illustrating a front surface of an electronic device according to various embodiments of the disclosure.
FIG. 2B is a perspective view schematically illustrating a rear surface of the electronic device of FIG. 2A according to various embodiments of the disclosure.
FIG. 3 is an exploded perspective view schematically illustrating a configuration of a speaker module included in an electronic device according to an embodiment of the disclosure.
FIG. 4 is a cross-sectional view schematically illustrating a configuration of a speaker module included in an electronic device according to an embodiment of the disclosure.
FIG. 5A is a perspective view schematically illustrating a diaphragm included in a speaker module according to an embodiment of the disclosure.
FIG. 5B is a cross-sectional view schematically illustrating the diaphragm according to an embodiment of the disclosure, taken along line 5-5' of FIG. 5A.
FIG. 6A is a perspective view schematically illustrating a diaphragm included in a speaker module according to various embodiments of the disclosure.
FIG. 6B is a cross-sectional view schematically illustrating the diaphragm according to various embodiments of the disclosure, taken along line 6-6' of FIG. 6A.
FIG. 7 is a schematic view illustrating the second plate included in the speaker module according to an embodiment of the disclosure, viewed in a second direction.
FIG. 8 is a cross-sectional view schematically illustrating an example in which the second plate according to an embodiment of the disclosure is applied to the speaker module, taken along line 8-8' of FIG. 7.
FIG. 9 is a cross-sectional view schematically illustrating an example in which the second plate according to an embodiment of the disclosure is applied to the speaker module, taken along line 9-9' of FIG. 7.
FIG. 10 is a cross-sectional view schematically illustrating an example in which the second plate according to an embodiment of the disclosure is applied to the speaker module, taken along line 10-10' of FIG. 7.
FIG. 11 is a schematic view illustrating the second plate included in the speaker module according to an embodiment of the disclosure, viewed in the first direction.
FIG. 12 is a cross-sectional view schematically illustrating the second plate according to an embodiment of the disclosure, taken along line 12-12' of FIG. 11.
FIG. 13 is a cross-sectional view schematically illustrating the second plate according to an embodiment of the disclosure, taken along line 13-13' of FIG. 11.
FIG. 14 is a cross-sectional view schematically illustrating the second plate 350 according to an embodiment of the disclosure, taken along line 14-14' of FIG. 11.
FIG. 15 is a cross-sectional view schematically illustrating the second plate 350 according to an embodiment of the disclosure, taken along line 15-15 of FIG. 11.
FIG. 16 is a cross-sectional view schematically illustrating the second plate according to an embodiment of the disclosure, taken along line 16-16 of FIG. 11.
FIG. 17 is a diagram illustrating a performance comparison in a low-frequency band between a speaker module according to an embodiment of the disclosure and a speaker module according to a comparative embodiment.

### [Mode for the Invention]

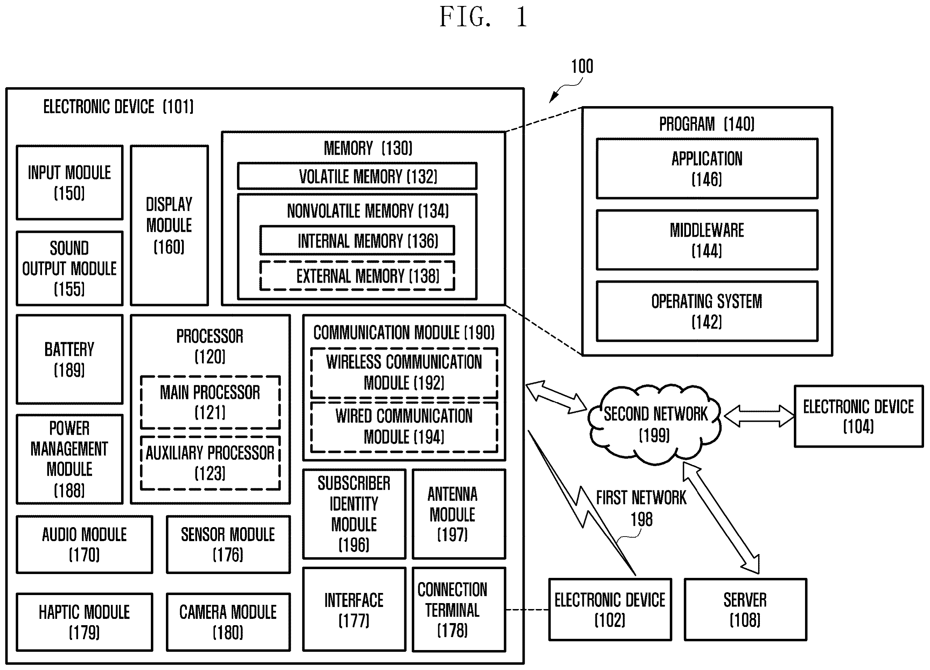

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

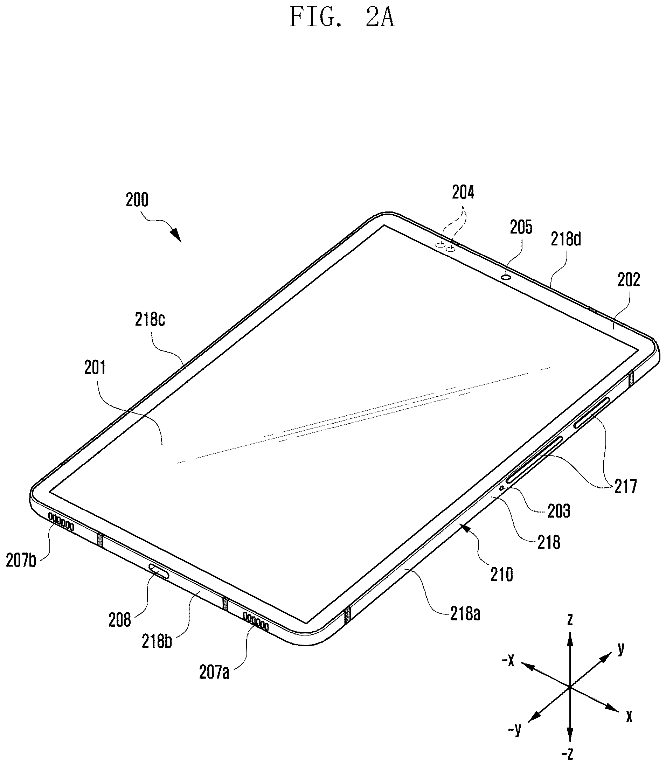

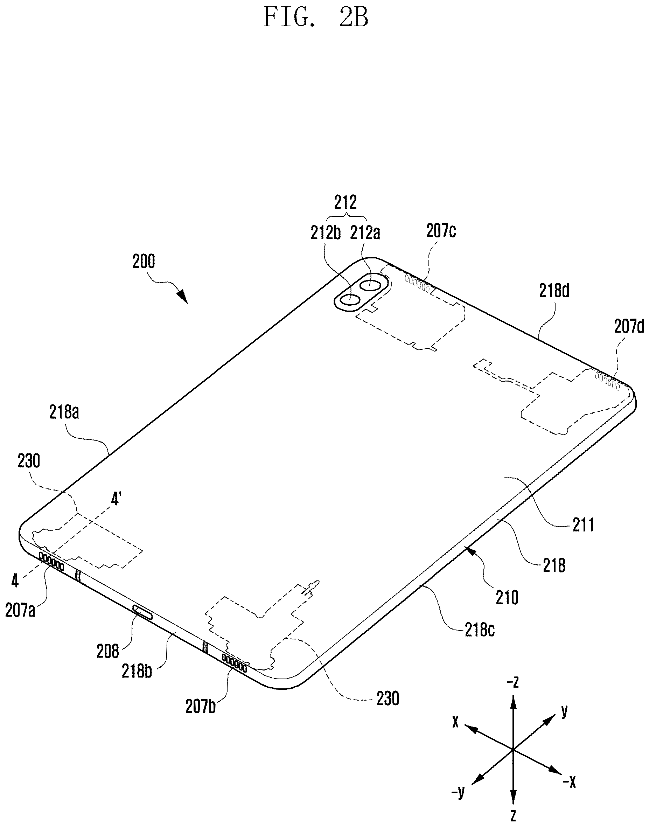

FIG. 2A is a perspective view schematically illustrating a front surface of an electronic device according to various embodiments of the disclosure. FIG. 2B is a perspective view schematically illustrating a rear surface of the electronic device of FIG. 2A according to various embodiments of the disclosure.

According to an embodiment, the electronic device 200 disclosed below may include at least a part of embodiments of the electronic device 101 disclosed in FIG. 1. Embodiments related to the electronic device 200 disclosed below may be applied to an electronic device such as a tablet PC. However, the electronic device 200 according to an embodiment of the disclosure is not limited to the tablet PC, and may be substantially equally applied to an electronic device such as a bar type, a foldable type, a rollable type, a sliding type, a wearable type, and/or a notebook PC.

Referring to FIGS. 2A and 2B, the electronic device 200 (e.g., the electronic device 101 of FIG. 1) according to an embodiment of the disclosure may include a housing 210 including a front surface plate 202 oriented in a first direction (e.g., z-axis direction), a rear surface plate 211 oriented in a second direction (e.g., -z-axis direction) opposite to the front surface plate 202, and a side surface member 218 surrounding a space between the front surface plate 202 and the rear surface plate 211. The side surface member 218 may include at least one speaker hole 207a, 207b, 207c, and/or 207d.

According to an embodiment, the side surface member 218 may include a first side surface 218a having a first length, a second side surface 218b extending in a direction perpendicular (e.g., the -x-axis direction) to the first side surface 218a and having a second length shorter than the first length, a third side surface 218c extending parallel to the first side surface 218a from the second side surface 218b and having the first length, and a fourth side surface 218d extending parallel to the second side surface 218b from the third side surface 218c and having the second length.

According to an embodiment, the front surface plate 202 may be a front surface cover (e.g., a first cover) defining a front surface periphery of the housing 210. The front surface plate 202 may be disposed in the first direction (e.g., the z-axis direction) of the electronic device 200. The front surface plate 202 may be formed of a glass plate or a polymer plate including various coating layers.

According to an embodiment, the rear surface plate 211 may be a rear surface cover (e.g., a second cover) forming at least a part of a rear surface (e.g., the -z-axis direction) of the housing 210. The rear surface plate 211 may be disposed in the second direction (e.g., the - z-axis direction) of the electronic device 200. The rear surface plate 211 may be formed of, for example, coated or colored glass, ceramic, polymer, metal (e.g., aluminum, stainless steel, or magnesium), or a combination of at least two of the materials. The rear surface plate 211 may be made of, for example, a metal material and/or a non-metal (e.g., a polymer) material.

According to an embodiment, the side member 218 may be coupled to the front surface plate 202 and the rear surface plate 211 and may configured in a side bezel structure including a metal and/or a polymer. According to various embodiments, the rear surface plate 211 and the side surface member 218 may be configured integrally, and may include the same material (e.g., a metal material such as aluminum or magnesium).

According to an embodiment, the electronic device 200 may include at least one of a display 201 (e.g., the display module 160 of FIG. 1), at least one input module 203 (e.g., the input module 150 of FIG. 1), one or more speaker holes 207a, 207b, 207c, and 207d, a sensor module 204 (e.g., the sensor module 176 of FIG. 1), camera modules 205 and 212 (212a, 212b) (e.g., the camera module 180 of FIG. 1), a key input device 217, or a connector hole 208. According to various embodiments, at least one of the above-described components may be omitted from the electronic device 200 or another component may be additionally included.

According to an embodiment, the display 201 may be disposed in the first direction (e.g., the upper surface or the z-axis direction) of the housing 210. For example, the display 201 may be visible through a substantial portion of the front surface plate 202. The display 201 may also be visible through substantially the entire area of the front surface plate 202. The edges of the display 201 may be formed substantially the same as an adjacent peripheral shape of the front surface plate 202. According to various embodiments, a recess or an opening may be formed in a portion of a screen display area of the display 201, and at least one of the above-described components may be disposed to be aligned with the recess or the opening.

According to various embodiments, the electronic device 200 may include, on a rear surface of the screen display area of the display 201, at least one of an audio module (e.g., the audio module 170 of FIG. 1), the sensor module 204, the camera module 205, or a light-emitting element (not illustrated).

According to an embodiment, the display 201 may be coupled to or disposed adjacent to a touch-sensing circuit, a pressure sensor capable of measuring the intensity (pressure) of a touch, and/or a digitizer that detects an electromagnetic-field-type electronic pen (a stylus pen).

According to an embodiment, the input module 203 may include at least one microphone. The input module 203 may include multiple microphones disposed at different positions so as to detect a direction of sound.

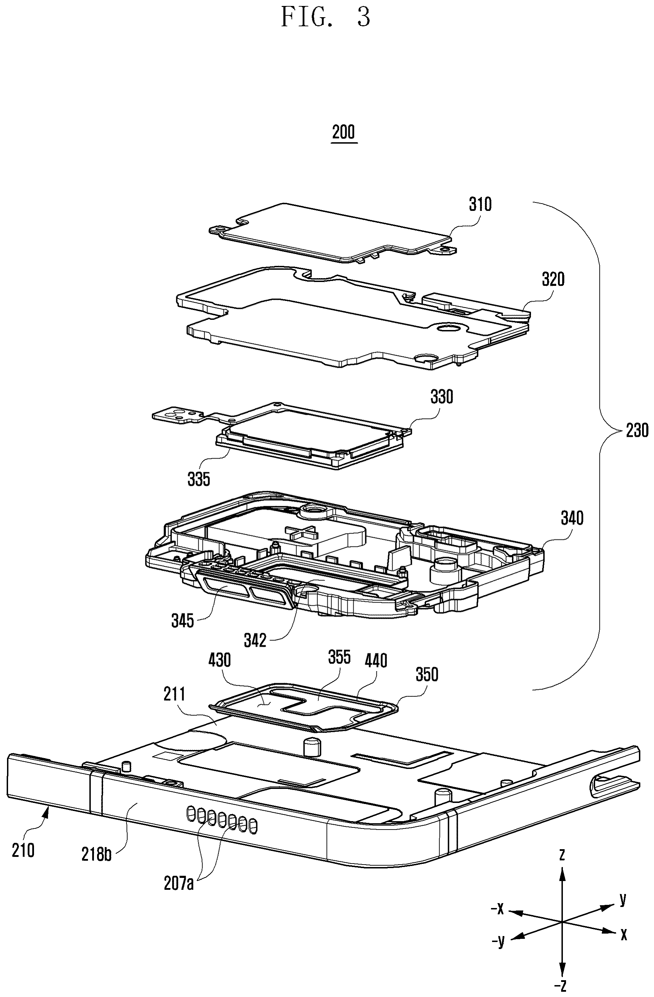

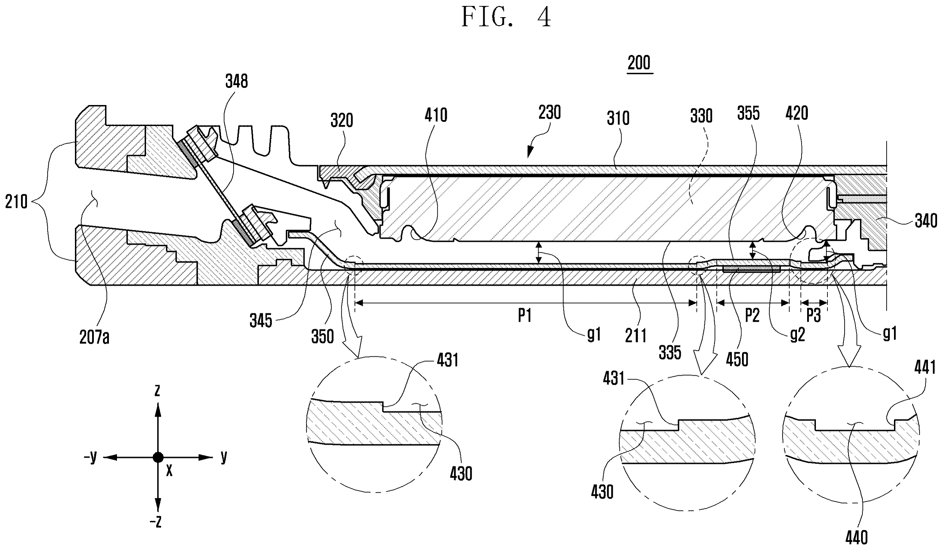

According to an embodiment, the at least one speaker hole 207a, 207b, 207c, and/or 207d may output sound output through the speaker module 230. The at least one speaker hole 207a, 207b, 207c, and/or 207d may be formed in the second side surface 218b (e.g., in the -y-axis direction) and/or the fourth side surface 218d (e.g., in the y-axis direction) of the housing 210. The at least one speaker hole 207a, 207b, 207c, and/or 207d may be formed at a position corresponding to an acoustic outlet of the speaker module 230 (e.g., the acoustic outlet 345 of FIGS. 3 and 4). The speaker module 230 may include an external speaker and/or a receiver for a call.

According to various embodiments, the electronic device 200 may include at least one speaker module 230. The speaker module 230 may be disposed inside the housing 210. The speaker module 230 may be disposed at each of corner portions in an inner space of the housing 210 of the electronic device 200. For example, the speaker module 230 may be disposed at a position corresponding to the at least one speaker hole 207a, 207b, 207c, and/or 207d. The at least one speaker module 230 may be disposed between the display 201 and the rear surface plate 211. The speaker module 230 may be disposed at a lower portion (e.g., in the -z-axis direction) of the display 201. The speaker module 230 may be disposed at an upper portion (e.g., in the z-axis direction) of the rear surface plate 211.

According to an embodiment, the sensor module 204 may generate an electrical signal or a data value corresponding to an operating state inside the electronic device 200 or an environmental state outside the electronic device 200. The sensor module 204 may include at least one of, for example, a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205 and 212 (212a and 212b) may include a front camera module 205 disposed to be exposed to the outside through the front surface plate 202 of the electronic device 200 and rear camera modules 212a and 212b disposed to be exposed to the outside through the rear surface plate 211. According to an embodiment, the camera modules 205, 212a, and 212b may include one or more lenses, an image sensor, and/or an image signal processor. According to an embodiment, at least two rear camera modules 212a and 212b may be disposed adjacent to each other as one camera module assembly 212. For example, the pair of camera modules 212a and 212b of the camera module assembly 212 may implement a dual camera function for general imaging, wide-angle imaging, or ultra-wide-angle imaging.

According to various embodiments, the key input devices 217 may be disposed to be exposed to the outside through the side surface member 218 of the housing 210. For example, the key input devices 217 may be disposed to be exposed to the outside through the first side surface 218a. According to various embodiments, the key input devices 217 may also be disposed to be exposed to the outside through the third side surface 218c. In an embodiment, the electronic device 200 may not include some or all of the key input devices 217, and a key input device 217 not included may be implemented in another form such as a soft key on the display 201. For example, the key input device 217 may be implemented by using a pressure sensor included in the display 201. The key input device 217 may include at least one pressure-responsive key that is disposed inside the electronic device 200 and uses a strain gauge that measures a pressure change due to the pressing of the side member 218. In an embodiment, the key input devices 217 may include a power button and/or a volume control button of the electronic device 200.

According to an embodiment, the connector hole 208 may be formed in the second side surface 218b of the housing 210. The connector hole 208 may include therein a connector port (e.g., a USB connector or an interface (IF) connector) for transmitting/receiving power and/or data to/from an external electronic device (e.g., the external electronic devices 102 and 104 of FIG. 1). The connector hole 208 may also perform a function of transmitting/receiving audio signals to/from the external electronic device (e.g., the external electronic devices 102 and 104 of FIG. 1), or may further include therein a separate connector port (e.g., an earphone jack) to perform an audio signal transmitting/receiving function. For example, a connector port (not illustrated) may include a connection terminal 178 disclosed in FIG. 1.

FIG. 3 is an exploded perspective view schematically illustrating a configuration of a speaker module included in an electronic device according to an embodiment of the disclosure.

According to various embodiments, the speaker module 230 may be disposed inside the housing 210 illustrated in FIGS. 2A and 2B. For example, the speaker module 230 may be disposed between the display 201 and the rear surface plate 211.

According to an embodiment, the speaker module 230 may include a first plate 310, a first frame 320, a speaker 330, a diaphragm 335, a second frame 340, and/or a second plate 350.

According to an embodiment, the speaker module 230 may be disposed at a position corresponding to the speaker hole (e.g., 207a) illustrated in FIGS. 2A and 2B and may output an acoustic signal to the outside of the electronic device 200.

According to an embodiment, the first plate 310 may be disposed at a lower portion (e.g., in the -z-axis direction or the lower surface) of the display 201. The first plate 310 may be disposed in a second direction (e.g., the -z-axis direction) opposite to the first direction of the display 201. The first plate 310 may be disposed in the first direction (e.g., in the z-axis direction or the upper surface) of the first frame 320. The first plate 310 may be formed of a conductive material (e.g., a metal) such as aluminum, SUS (stainless steel), or magnesium. The first plate 310 may shield magnetic force generated from a magnet (not illustrated) disposed at a predetermined position of the speaker module 230 (e.g., the speaker 330).

According to an embodiment, the first frame 320 may be disposed in the second direction (e.g., the -z-axis direction or the lower surface) of the first plate 310. The first frame 320 may have a predetermined thickness and may constitute at least a portion of an external shape of the speaker module 230. The first frame 320 may include a non-metal material (e.g., a polymer) and/or a metal material. The first frame 320 may include an inner space in a predetermined area.

According to an embodiment, the speaker 330 may be disposed in the second direction (e.g., the -z-axis direction or the lower portion) of the first frame 320. For example, the speaker 330 may be disposed in the second direction (e.g., the -z-axis direction or the lower portion) of the first plate 310. The speaker 330 may be disposed in at least a portion of the inner space of the first frame 320. The speaker 330 may convert an electrical signal into sound and output the sound. The speaker 330 may include a yoke, a magnet, a substrate, and/or a voice coil (not illustrated). The speaker 330 may be disposed between the first frame 320 and the second frame 340.

According to an embodiment, the diaphragm 335 may be disposed in the second direction (e.g., the -z-axis direction, the lower portion, or the bottom surface) of the speaker 330. The diaphragm 335 (e.g., a sound generating module) may generate sound by vertical vibration. The sound generated by the vibration of the diaphragm 335 may be output through the acoustic outlet 345. For example, the acoustic outlet 345 may be formed in the -y-axis direction of the second frame 340.

According to an embodiment, the second frame 340 may be disposed in the second direction (e.g., the -z-axis direction or the lower portion) of the diaphragm 335. The second frame 340 may have a predetermined thickness and may constitute at least a portion of an external shape of the speaker module 230. The second frame 340 may include a non-metal material (e.g., a polymer) and/or a metal material. The second frame 340 may include an inner space in a predetermined region. The second frame 340 may include an opening 342. The speaker 330 and the diaphragm 335 may be at least partially disposed in the opening 342. The second frame 340 may include an acoustic outlet 345. The acoustic outlet 345 may include an acoustic output space formed between the diaphragm 335 and the second plate 350. For example, when moisture is infiltrated into the speaker module 230, the moisture may be discharged and/or removed through the acoustic outlet 345.

According to various embodiments, the first frame 320 (e.g., an upper housing) and the second frame 340 (e.g., a lower housing) may form a housing of the speaker module 230. For example, the housing of the speaker module 230 may be configured through coupling of the first frame 320 (e.g., the upper housing) and the second frame 340 (e.g., the lower housing). The speaker 330 and the diaphragm 335 may be disposed between the first frame 320 and the second frame 340. Sound output through the speaker 330 may be transferred to the diaphragm 335, and the sound transferred to the diaphragm 335 may be transferred to the outside of the electronic device 200 through the acoustic outlet 345 and the speaker hole 207a. For example, the speaker hole 207a may be formed in the second side surface 218b of the housing 210 illustrated in FIGS. 2A and 2B.

According to an embodiment, the second plate 350 may be disposed in the second direction (e.g., the -z-axis direction or the lower portion) of the diaphragm 335. The second plate 350 may be disposed in at least a part of the second direction (e.g., the -z-axis direction or the lower portion) of the second frame 340. The second plate 350 may be formed of a conductive material (e.g., a metal) such as aluminum, SUS (stainless steel), or magnesium. The second plate 350 may be disposed at a position facing the diaphragm 335. The second plate 350 may be disposed spaced apart from the diaphragm 335. An acoustic outlet 345 may be formed between the diaphragm 335 and the second plate 350. The acoustic outlet 345 may include a passage through which sound is transmitted.

According to various embodiments, the second plate 350 may include a protrusion 355, a first recess 430, and/or a second recess 440. For example, the protrusion 355 may be formed in a substantially T-like shape. For example, the protrusion 355 may be formed in a shape similar to the T-like shape or may be formed in various other shapes.

According to an embodiment, the second plate 350 may be disposed in a third direction (e.g., the x-axis direction or the upper portion) of the rear surface plate 211. For example, the second plate 350 may be disposed to be coupled to at least a portion of an upper surface of the rear surface plate 211. An elastic member (e.g., the elastic member 450 of FIG. 4) may be disposed at least partially between the second plate 350 and the rear surface plate 211. The elastic member 450 may include a sponge or double-sided adhesive tape.

FIG. 4 is a cross-sectional view schematically illustrating a configuration of a speaker module included in an electronic device according to an embodiment of the disclosure.

For example, FIG. 4 may be a cross-sectional view illustrating a cross-section of the electronic device 200 according to an embodiment of the disclosure, taken along line 4-4' of FIG. 2A and viewed in the x-axis direction. For example, FIG. 4 may be a schematic cross-sectional view of a state in which the speaker module 230 and the rear surface plate 211 illustrated in FIG. 3 according to an embodiment of the disclosure are combined. In the description of FIG. 4, configurations substantially the same as the embodiments illustrated in the electronic device 200 of FIGS. 2A and 2B and the speaker module 230 of FIG. 3 may be denoted by the same reference numerals, and redundant descriptions thereof may be omitted.

According to various embodiments, the speaker module 230 may be disposed inside the housing 210 illustrated in FIGS. 2A and 2B. For example, the speaker module 230 may be disposed in the first direction (e.g., the z-axis direction or the upper portion) of the rear surface plate 211. The speaker module 230 may be disposed at a position corresponding to the speaker hole 207a illustrated in FIGS. 2A and 2B, and may output an acoustic signal to the outside of the electronic device 200 through the acoustic outlet 345.

According to an embodiment, a dustproof member 348 may be disposed between the acoustic outlet 345 of the speaker module 230 and the speaker hole 207a. For example, the dustproof member 348 may be disposed at a predetermined position of the acoustic outlet 345. The dustproof member 348 may separate the acoustic outlet 345 and the speaker hole 207a. The dustproof member 348 may prevent and/or block foreign substances from being introduced into the acoustic outlet 345 through the speaker hole 207a. The dustproof member 348 may be formed of a rubber material including a porous structure and/or a mesh structure. For example, the dustproof member 348 may be formed of at least one of urethane or silicone. The dustproof member 348 may be formed in a structure in which moisture is discharged through the acoustic outlet 345 to the speaker hole 207a. The dustproof member 348 may be formed in a structure in which sound output through the acoustic outlet 345 is allowed to be delivered to the outside of the electronic device 200 through the speaker hole 207a.

According to an embodiment, the speaker module 230 may include a first plate 310, a speaker 330, a diaphragm 335, and/or a second plate 350.

According to an embodiment, the first plate 310 may be disposed in the second direction (e.g., the -z-axis direction or the lower portion) of the display 201 (e.g., the display 201 of FIGS. 2A and 2B).

According to an embodiment, the speaker 330 may be disposed in the second direction (e.g., the -z-axis direction or the lower portion) of the first plate 310.

According to an embodiment, the diaphragm 335 may be disposed in the second direction (e.g., the -z-axis direction or the lower portion or bottom surface) of the speaker 330. The diaphragm 335 may include a first groove 410 and a second groove 420. For example, the first groove 410 may be formed in the -y-axis direction of the diaphragm 335. For example, the second groove 420 may be formed in the y-axis direction of the diaphragm 335. The diaphragm 335 (e.g., a sound generating module) may generate sound by vertical vibration. Sound generated by vibration of the diaphragm 335 may be output through the acoustic outlet 345.

According to an embodiment, the second plate 350 may be disposed in the second direction (e.g., the -z-axis direction or the lower portion) of the diaphragm 335. The second plate 350 may be disposed at a position facing the diaphragm 335. The second plate 350 may be disposed spaced apart from the diaphragm 335. An acoustic outlet 345 may be formed between the diaphragm 335 and the second plate 350.

According to an embodiment, the second plate 350 may include a first portion P1, a second portion P2, and/or a third portion P3. The first portion P1 of the second plate 350 may have a first gap g1 from a portion of the diaphragm 335. For example, the first portion P1 may be spaced apart from a portion of the diaphragm 335 by the first gap g1. The second portion P2 of the second plate 350 may have a second gap g2 from a portion of the diaphragm 335. For example, the second portion P2 may be spaced apart from a portion of the diaphragm 335 by the second gap g2. The third portion P3 of the second plate 350 may have the first gap g1 from a portion of the diaphragm 335. For example, the third portion P3 may be spaced apart from a portion of the diaphragm 335 by the first gap g1.

According to various embodiments, the first gap g1 between the first portion P1 of the second plate 350 and a portion of the diaphragm 335 may be at least about 0.6 mm or greater. The first gap g1 between the third portion P3 of the second plate 350 and a portion of the diaphragm 335 may be at least about 0.6 mm or greater. For example, the first gap g1 between the first portion P1 of the second plate 350 and a portion of the diaphragm 335 may be about 0.5 mm to 0.9 mm. For example, the second gap g2 between the second portion P2 of the second plate 350 and a portion of the diaphragm 335 may be about 0.3 mm to 0.7 mm. For example, the first gap g1 between the third portion P3 of the second plate 350 and a portion of the diaphragm 335 may be about 0.5 mm to 0.9 mm. According to various embodiments, the first gap g1 and the second gap g2 described above are merely exemplary, and are not limited to the above examples, but may include various other gaps.

According to an embodiment, the first portion P1 of the second plate 350 may have a smaller thickness than the second portion P2. The third portion P3 of the second plate 350 may have a smaller thickness than the second portion P2. The first portion P1 and the third portion P3 may be formed to have substantially the same thickness. According to various embodiments, the first portion P1 and the third portion P3 may be formed with different thicknesses.

According to an embodiment, the first portion P1 of the second plate 350 may include a portion facing the first groove 410 formed in the diaphragm 335. For example, the first groove 410 of the diaphragm 335 may be formed to face the first portion P1 of the second plate 350. The third portion P3 of the second plate 350 may include a portion facing a second groove 420 formed in the diaphragm 335. For example, the second groove 420 of the diaphragm 335 may be formed to face the third portion P3 of the second plate 350. The second portion P2 of the second plate 350 may include a portion between the first groove 410 and the second groove 420 of the diaphragm 335.

According to an embodiment, the first portion P1 of the second plate 350 may include a first recess 430. The first recess 430 may be formed in the first portion P1 of the second plate 350 via a first step 431. According to various embodiments, the first recess 430 may also be formed in the first portion P1 of the second plate 350 via an inclined surface (e.g., a first inclined surface). For example, the first step 431 may be formed as the first inclined surface. The third portion P3 of the second plate 350 may include a second recess 440. The second recess 440 may be formed in the third portion P3 of the second plate 350 via a second step 441. According to various embodiments, the second recess 440 may also be formed in the third portion P3 of the second plate 350 via an inclined surface (e.g., a second inclined surface). For example, the second step 441 may be formed as the second inclined surface. For example, the first recess 430 and/or the second recess 440 may be formed by using at least one of etching or milling. The second portion P2 of the second plate 350 may include a protrusion 355. The protrusion 355 may be disposed between the first recess 430 and the second recess 440.

According to an embodiment, by the first recess 430 formed in the first portion P1 and/or the second recess 440 formed in the third portion P3 of the second plate 350, a gap (e.g., the first gap g1) facing the diaphragm 335 may be formed more widely, thereby allowing moisture introduced into the acoustic outlet 345 to be easily discharged and/or removed. According to various embodiments, by the first recess 430 and/or the second recess 440 of the second plate 350, the gap (e.g., the first gap g1) facing the diaphragm 335 may be widened, so that the movable range with the diaphragm 335 may be increased, and performance in a low-frequency band of the speaker module 230 may be improved.

According to an embodiment, an elastic member 450 (e.g., a support member) may be disposed at least partially between the second plate 350 and the rear surface plate 211. For example, the elastic member 450 may be disposed between the second portion P2 of the second plate 350 and the rear surface plate 211. The elastic member 450 may alleviate vibration transmitted to the rear surface plate 211 through the second plate 350 when the diaphragm 335 vibrates. The elastic member 450 may reduce vibration noise or resonant noise of the second plate 350.

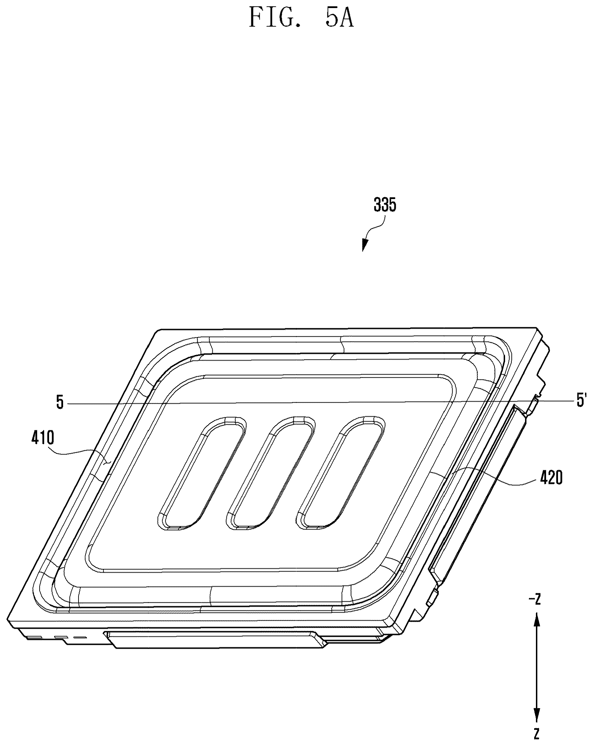

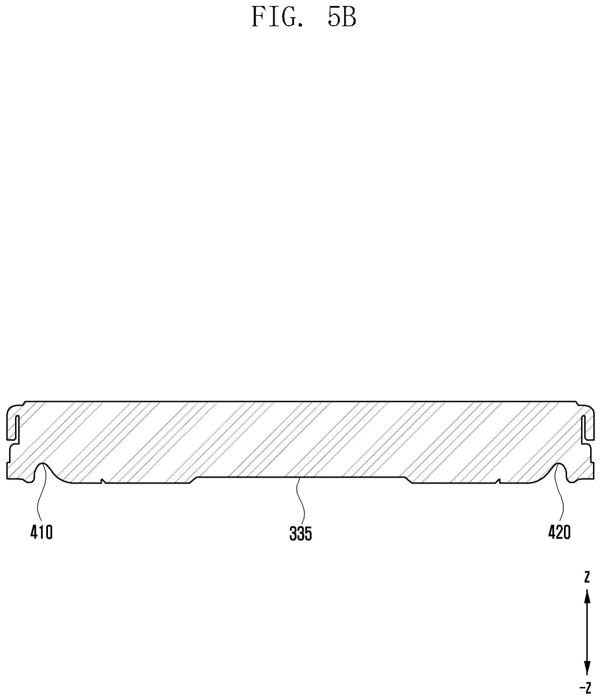

FIG. 5A is a perspective view schematically illustrating a diaphragm included in a speaker module according to an embodiment of the disclosure. FIG. 5B is a cross-sectional view schematically illustrating the diaphragm according to an embodiment of the disclosure, taken along line 5-5' of FIG. 5A.

Referring to FIGS. 5A and 5B, the diaphragm 335 may be disposed in the second direction (e.g., the -z-axis direction, the lower portion, or the lower surface) of the speaker 330 illustrated in FIG. 3. The diaphragm 335 may include a first groove 410 and a second groove 420.

According to an embodiment, the first groove 410 of the diaphragm 335 may be formed at a position facing a portion of the first portion P1 of the second plate 350. The second groove 420 of the diaphragm 335 may be formed at a position facing a portion of the third portion P3 of the second plate 350. The first groove 410 and the second groove 420 of the diaphragm 335 may be formed in a concave shape. The first groove 410 and the second groove 420 of the diaphragm 335 may be portions through which sound of the acoustic outlet 345 is output.

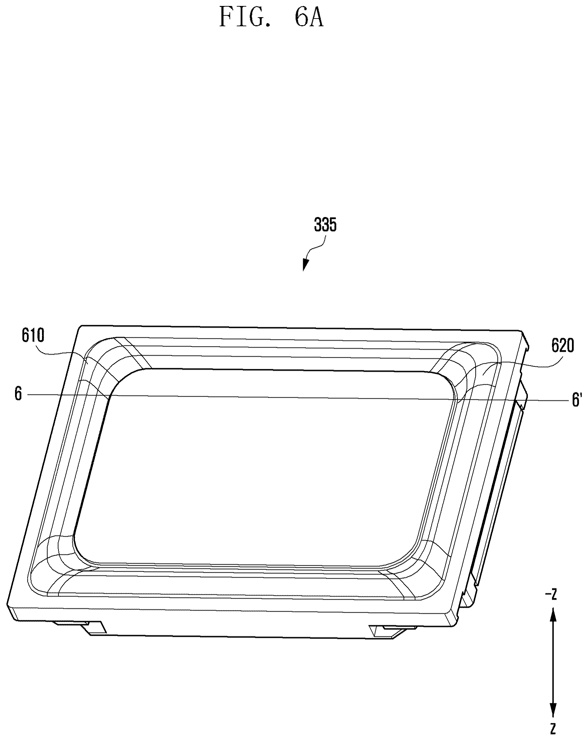

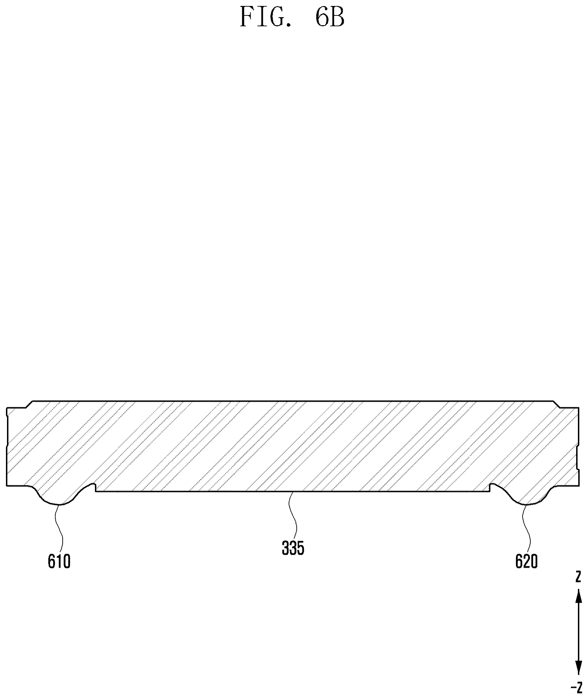

FIG. 6A is a perspective view schematically illustrating a diaphragm included in a speaker module according to various embodiments of the disclosure. FIG. 6B is a cross-sectional view schematically illustrating the diaphragm according to various embodiments of the disclosure, taken along line 6-6' of FIG. 6A.

Referring to FIGS. 6A and 6B, the diaphragm 335 may be disposed in the second direction (e.g., the -z-axis direction, the lower portion, or the lower surface) of the speaker 330 illustrated in FIG. 3. The diaphragm 335 may include a first bump 610 and a second bump 620.

According to an embodiment, the first bump 610 of the diaphragm 335 may be formed at a position facing a portion of the first portion P1 of the second plate 350. The second bump 620 of the diaphragm 335 may be formed at a position facing a portion of the third portion P3 of the second plate 350. The first bump 610 and the second bump 620 of the diaphragm 335 may be formed in a convex shape. The first bump 610 and the second bump 620 of the diaphragm 335 may be portions through which sound of the acoustic outlet 345 is output.

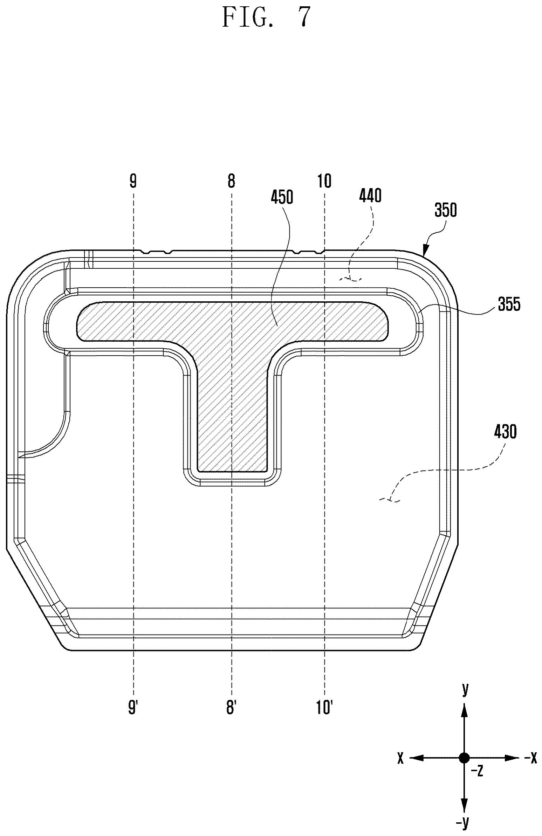

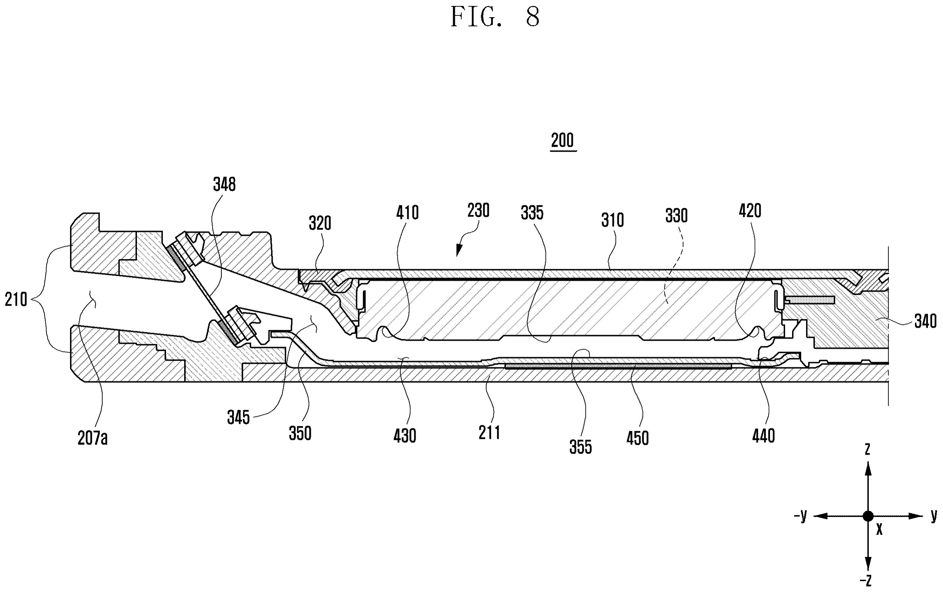

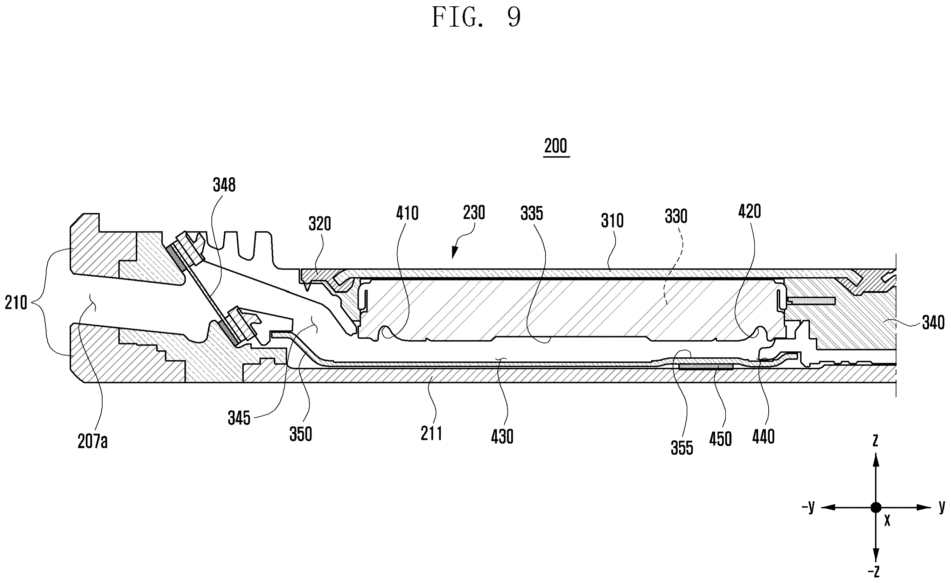

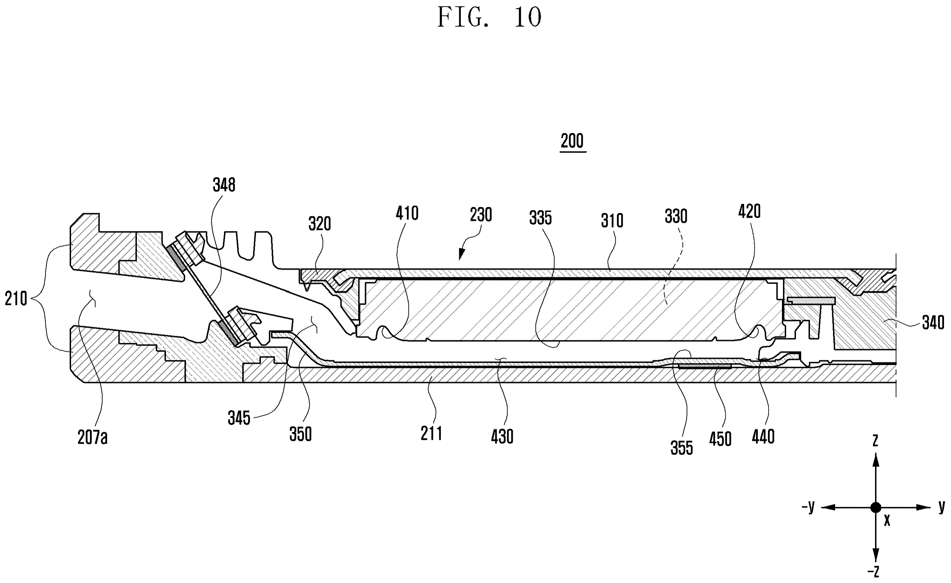

FIG. 7 is a schematic view illustrating the second plate included in the speaker module according to an embodiment of the disclosure, viewed in the second direction. FIG. 8 is a cross-sectional view schematically illustrating an example in which the second plate according to an embodiment of the disclosure is applied to the speaker module, taken along line 8-8' of FIG. 7. FIG. 9 is a cross-sectional view schematically illustrating an example in which the second plate according to an embodiment of the disclosure is applied to the speaker module, taken along line 9-9' of FIG. 7. FIG. 10 is a cross-sectional view schematically illustrating an example in which the second plate according to an embodiment of the disclosure is applied to the speaker module, taken along line 10-10' of FIG. 7.

For example, FIG. 7 may be a view of the second plate 350 of the speaker module 230 illustrated in FIG. 3 according to an embodiment of the disclosure, viewed in the -z-axis direction. In the description of FIGS. 7 to 10, components that are substantially identical to those disclosed in the electronic device 200 illustrated in FIGS. 2A and 2B and the speaker module 230 illustrated in FIGS. 3 to 6 may be assigned the same reference numerals, and redundant descriptions thereof may be omitted.

Referring to FIGS. 7 to 10, the second plate 350 may include a protrusion 355, a first recess 430, a second recess 440, and/or an elastic member 450.

According to an embodiment, the protrusion 355 may be formed in a T-shape. For example, the protrusion 355 may be a portion corresponding to the second portion P2 of the second plate 350. The protrusion 355 may compensate for high-frequency characteristics of the speaker module 230 through a second gap g2 with the diaphragm 335. An elastic member 450 may be disposed inside the protrusion 355.

According to an embodiment, the first recess 430 may be formed in the -y-axis direction of the second plate 350.

According to an embodiment, the second recess 440 may be formed in the y-axis direction of the second plate 350.

According to an embodiment, the elastic member 450 may be disposed between the protrusion 355 of the second plate 350 (e.g., the second portion P2 of the second plate 350) and the rear surface plate 211. The elastic member 450 may be disposed inside the protrusion 355 of the second plate 350. For example, the elastic member 450 may be disposed to correspond to the T-shaped protrusion 355 of the second plate 350. The elastic member 450 may reduce vibration noise or resonant noise of the second plate 350.

Referring to FIG. 8, when a cross-section is formed at the center of the protrusion 355 having a T-shape of the second plate 350, the size of the first recess 430 in the y-axis and -y-axis directions may be smaller than that of the protrusion 355. In this case, the size of the second recess 440 in the y-axis and -y-axis directions may be smaller than that of the first recess 430 and the protrusion 355.

Referring to FIG. 9, when a cross-section is formed in the x-axis direction of the protrusion 355 having a T-shape of the second plate 350, the size of the first recess 430 in the y-axis and -y-axis directions may be greater than that of the protrusion 355. In this case, the size of the second recess 440 in the y-axis and -y-axis directions may be smaller than that of the first recess 430 and the protrusion 355.

Referring to FIG. 10, when a cross-section is formed in the -x-axis direction of the protrusion 355 having a T-shape of the second plate 350, the size of the first recess 430 in the y-axis and -y-axis directions may be greater than that of the protrusion 355. In this case, the size of the second recess 440 in the y-axis and -y-axis directions may be smaller than that of the first recess 430 and the protrusion 355.

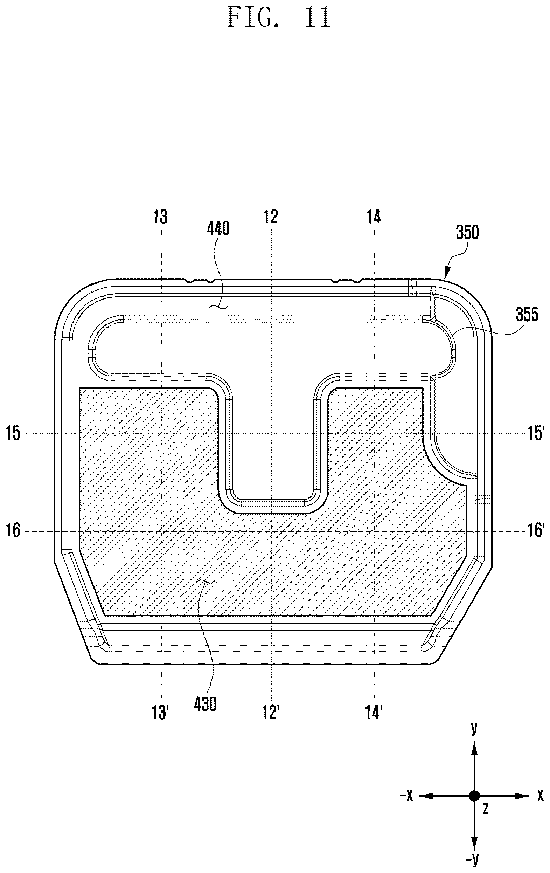

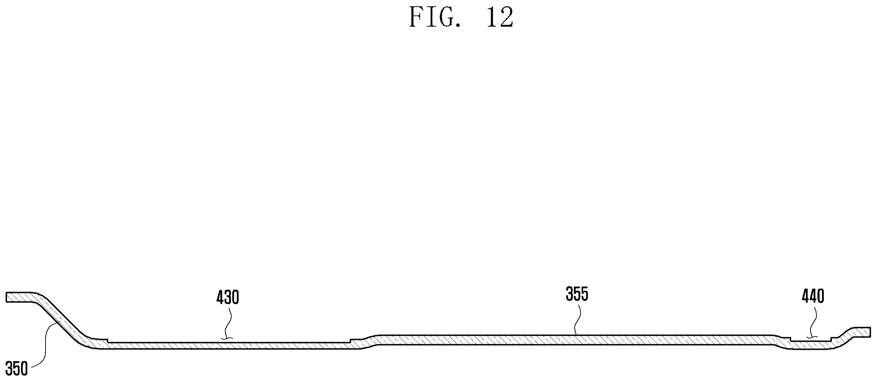

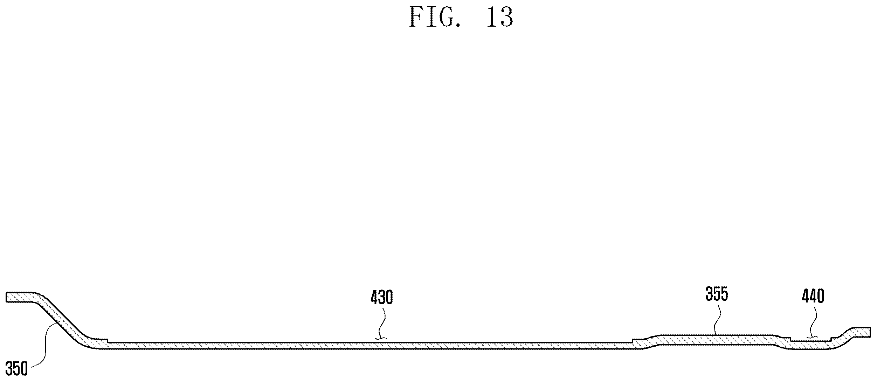

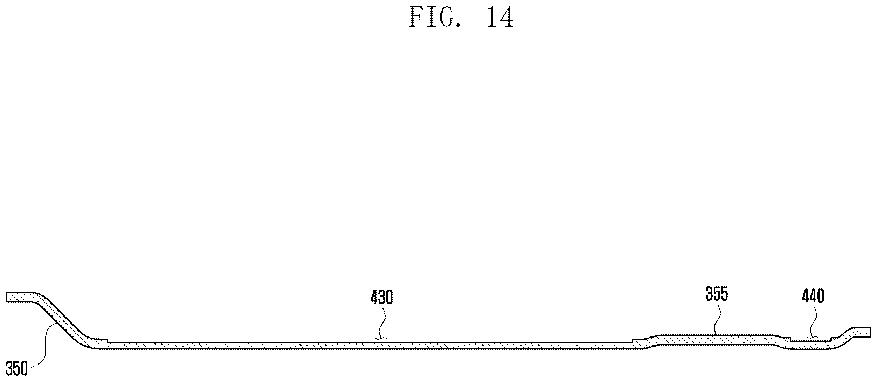

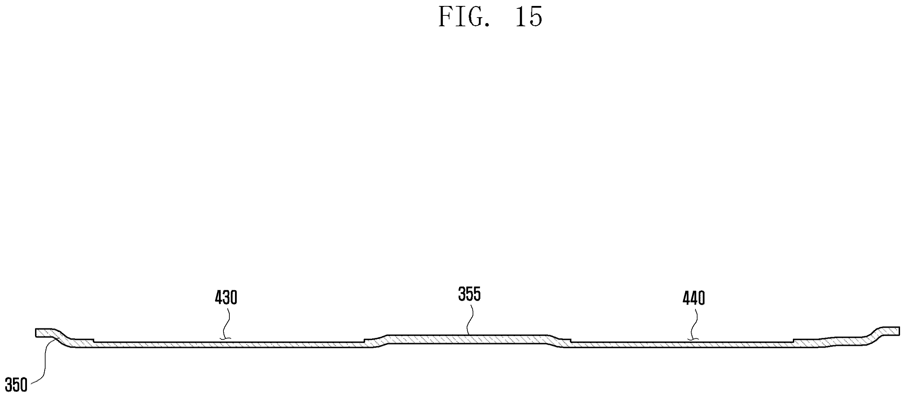

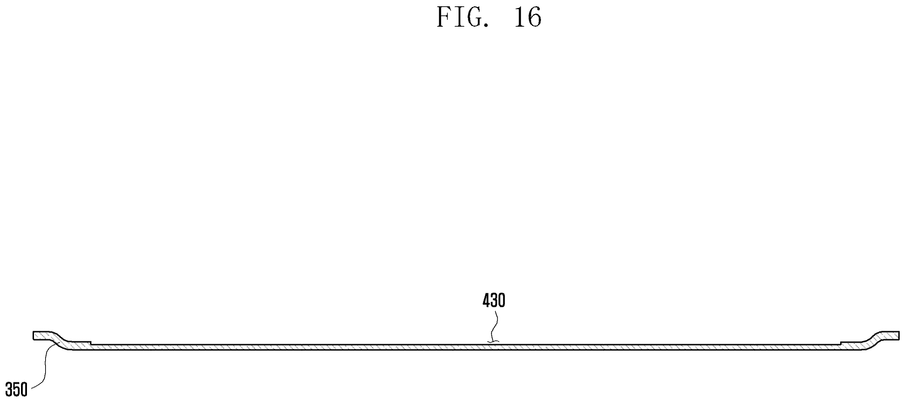

FIG. 11 is a schematic view illustrating the second plate included in the speaker module according to an embodiment of the disclosure, viewed in the first direction. FIG. 12 is a cross-sectional view schematically illustrating the second plate according to an embodiment of the disclosure, taken along line 12-12' of FIG. 11. FIG. 13 is a cross-sectional view schematically illustrating the second plate according to an embodiment of the disclosure, taken along line 13-13' of FIG. 11. FIG. 14 is a cross-sectional view schematically illustrating the second plate according to an embodiment of the disclosure, taken along line 14-14' of FIG. 11. FIG. 15 is a cross-sectional view schematically illustrating the second plate according to an embodiment of the disclosure, taken along line 15-15 of FIG. 11. FIG. 16 is a cross-sectional view schematically illustrating the second plate according to an embodiment of the disclosure, taken along line 16-16 of FIG. 11.

For example, FIG. 11 may be a view of the second plate 350 of the speaker module 230 illustrated in FIG. 3 according to an embodiment of the disclosure, viewed in the z-axis direction. In the description of FIGS. 11 to 16, components that are substantially identical to those disclosed in the electronic device 200 illustrated in FIGS. 2A and 2B and the speaker module 230 illustrated in FIGS. 3 to 10 may be assigned the same reference numerals, and redundant descriptions thereof may be omitted.

Referring to FIGS. 11 to 16, the second plate 350 may include a protrusion 355, a first recess 430, and/or a second recess 440.

According to an embodiment, the protrusion 355 may be formed in a T-shape. For example, the protrusion 355 may be a portion corresponding to the second portion P2 of the second plate 350.

According to an embodiment, the first recess 430 may be formed in the -y-axis direction of the second plate 350.

According to an embodiment, the second recess 440 may be formed in the y-axis direction of the second plate 350.

Referring to FIG. 12, when a cross-section is formed at the center of the protrusion 355 having a T-shape of the second plate 350, the size of the first recess 430 in the y-axis and -y-axis directions may be smaller than that of the protrusion 355. In this case, the size of the second recess 440 in the y-axis and -y-axis directions may be smaller than that of the first recess 430 and the protrusion 355.

Referring to FIG. 13, when a cross-section is formed in the -x-axis direction of the protrusion 355 having a T-shape of the second plate 350, the size of the first recess 430 in the y-axis and -y-axis directions may be greater than that of the protrusion 355. In this case, the size of the second recess 440 in the y-axis and -y-axis directions may be smaller than that of the first recess 430 and the protrusion 355.

Referring to FIG. 14, when a cross-section is formed in the x-axis direction of the protrusion 355 having a T-shape of the second plate 350, the size of the first recess 430 in the y-axis and -y-axis directions may be greater than that of the protrusion 355. In this case, the size of the second recess 440 in the y-axis and -y-axis directions may be smaller than that of the first recess 430 and the protrusion 355.

Referring to FIG. 15, when a cross-section is formed at the center (e.g., in the x-axis and -x-axis directions) of the protrusion 355 having a T-shape of the second plate 350, the size of the first recess 430 in the -x-axis and x-axis directions may be greater than that of the protrusion 355. In this case, the size of the second recess 440 in the -x-axis and x-axis directions may be smaller than that of the first recess 430 and greater than that of the protrusion 355.

Referring to FIG. 16, when a cross-section is formed at the lower portion (e.g., in the x-axis and -x-axis directions) of the protrusion 355 having a T-shape of the second plate 350, for example, only the first recess 430 may appear. For example, when a cross-section is formed at the upper portion (e.g., in the x-axis and -x-axis directions) of the protrusion 355 having a T-shape of the second plate 350, only the second recess 440 may appear.

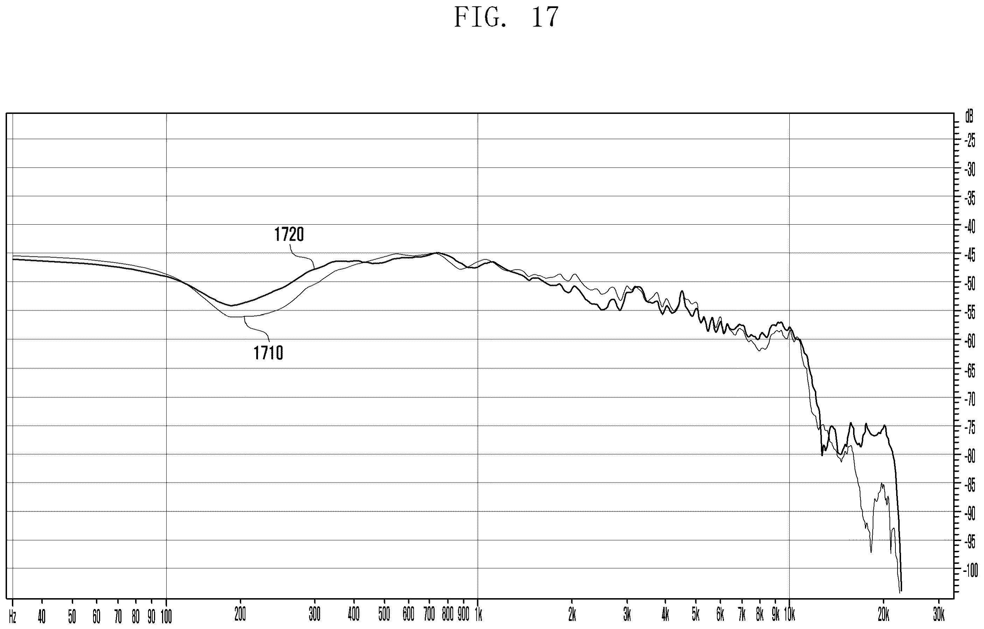

FIG. 17 is a diagram illustrating a performance comparison in a low-frequency band between a speaker module according to an embodiment of the disclosure and a speaker module according to a comparative embodiment.

For example, in the speaker module 230 included in the electronic device 200 according to an embodiment of the disclosure, the second plate 350 facing the diaphragm 335 may include the first recess 430, the protrusion 355, and/or the second recess 440. In the speaker module according to the comparative embodiment, the diaphragm and the second plate facing the same may be formed with the same thickness.

In FIG. 17, a first graph 1710 may represent performance of a speaker module according to a comparative embodiment. A second graph 1720 may represent performance of the speaker module 230 according to an embodiment of the disclosure.

Referring to FIG. 17, it may be identified that the performance 1720 of the speaker module 230 according to an embodiment of the disclosure is improved in a low-frequency band (e.g., about 150 Hz to 400 Hz) compared to the performance 1710 of the speaker module according to the comparative embodiment. For example, the speaker module 230 according to an embodiment of the disclosure may have improved volume in a low-frequency band (e.g., about 150 Hz to 400 Hz) output through the speaker 330 and the acoustic outlet 345.

In an embodiment, a volume recovery experiment was conducted five times at a volume within about 5 dB after reproducing a sound source for about 30 seconds through the speaker module 230 according to an embodiment of the disclosure and the speaker module according to the comparative embodiment.

As a result of the experiment, as shown in Table 1 below, it may be identified that the speaker module 230 according to an embodiment of the disclosure exhibited improved volume recovery performance compared to the speaker module according to the comparative embodiment.

**[Table 1]**

| Times | Speaker module of comparative embodiment | | Speaker module of the disclosure | |
|---|---|---|---|---|
| | Initial volume (dB) | Final volume (dB) | Initial volume (dB) | Final volume (dB) |
| 1 | 81.1 | 74.1 | 82.6 | 78.8 |
| 2 | 82.3 | 70.8 | 82.5 | 80.8 |
| 3 | 81.8 | 70 | 82.0 | 80.5 |
| 4 | 81.1 | 72.7 | 82.1 | 80.4 |
| 5 | 81.8 | 73.9 | 82.1 | 79.5 |

According to an embodiment of the disclosure, an electronic device 101 or 200 may include a housing 210 including a front surface plate 202, a rear surface plate 211 facing away from the front surface plate 202, and a side surface member 218 surrounding a space between the front surface plate 202 and the rear surface plate 211 and including a speaker hole 207a, a display 201 disposed in the first direction of the housing 210, and a speaker module 230 disposed inside the housing 210 to correspond to the speaker hole 207a.

According to an embodiment, the speaker module 230 may include a first plate 310 disposed in the second direction opposite to the first direction of the display 201, a speaker 330 disposed in the second direction of the first plate 310, a diaphragm 335 disposed in the second direction of the speaker 330, a second plate 350 spaced apart from the diaphragm 335 and disposed in the first direction of the rear surface plate 211, and an acoustic outlet 345 formed between the diaphragm 335 and the second plate 350.

According to an embodiment, the second plate 350 may include a first portion P1 having a first gap g1 from the diaphragm 335 and a second portion P2 having a second gap g2 from the diaphragm 335, and the first portion P1 may be configured to have a smaller thickness than the second portion P2.

According to an embodiment, the second plate 350 may include a third portion P3 having the first gap g1 from the diaphragm 335.

According to an embodiment, an elastic member 450 may be disposed between the second portion P2 of the second plate 350 and the rear surface plate 211.

According to an embodiment, the diaphragm 335 may include a first groove 410 formed in a portion facing the first portion P1 of the second plate 350.

According to an embodiment, the diaphragm 335 may include a second groove 420 formed in a portion facing the third portion P3 of the second plate 350.

According to an embodiment, the diaphragm 335 may include a first bump 610 formed in a portion facing the first portion P1 of the second plate 350.

According to an embodiment, the diaphragm 335 may include a second bump 620 formed in a portion facing the third portion P3 of the second plate 350.

According to an embodiment, a dustproof member 348 may be disposed at a predetermined position of the acoustic outlet 345.

According to an embodiment, a first recess 430 may be formed in the first portion P1 of the second plate 350.

According to an embodiment, a second recess 440 may be formed in the third portion P3 of the second plate 350.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

In the foregoing, the disclosure has been described with reference to various embodiments of the disclosure, but it is evident that changes and modifications made by a person ordinarily skilled in the art to which the disclosure belongs without departing from the technical spirit of the disclosure fall within the scope of the disclosure.

## Claims

1. An electronic device (101, 200) comprising:
a housing (210) comprising a front surface plate (202), a rear surface plate (211) facing away from the front surface plate (202), and a side surface member (218) surrounding a space between the front surface plate (202) and the rear surface plate (211) and comprising a speaker hole (207a);
a display (201) disposed in a first direction of the housing (210); and
a speaker module (230) disposed inside the housing (210) to correspond to the speaker hole (207a),
wherein the speaker module (230) comprises:
a first plate (310) disposed in a second direction opposite to the first direction of the display (201);
a speaker (330) disposed in the second direction of the first plate (310);
a diaphragm (335) disposed in the second direction of the speaker (330);
a second plate (350) spaced apart from the diaphragm (335) and disposed in the first direction of the rear surface plate (211); and
an acoustic outlet (345) formed between the diaphragm (335) and the second plate (350),
wherein the second plate (350) comprises:
a first portion (P1) having a first gap (g1) from the diaphragm (335); and
a second portion (P2) having a second gap (g2) from the diaphragm (335), and
wherein the first portion (P1) is configured to have a smaller thickness than the second portion (P2).

2. The electronic device of claim 1, wherein the second plate (350) comprises a third portion (P3) having the first gap (g1) from the diaphragm (335).

3. The electronic device of claim 1 or 2, wherein an elastic member (450) is disposed between the second portion (P2) of the second plate (350) and the rear surface plate (211).

4. The electronic device of claim 1 or 2, wherein the diaphragm (335) comprises a first groove (410) formed in a portion facing the first portion (P1) of the second plate (350).

5. The electronic device according to claim 2, wherein the diaphragm (335) comprises a second groove (420) formed in a portion facing the third portion (P3) of the second plate (350).

6. The electronic device of claim 1 or 2, wherein the diaphragm (335) comprises a first bump (610) formed in a portion facing the first portion (P1) of the second plate (350).

7. The electronic device according to claim 2, wherein the diaphragm (335) comprises a second bump (620) formed in a portion facing the third portion (P3) of the second plate (350).

8. The electronic device of any one of claims 1 to 7, wherein a dustproof member (348) is disposed at a predetermined position of the acoustic outlet (345).

9. The electronic device of claim 1 or 2, wherein a first recess (430) is formed in the first portion (P1) of the second plate (350).

10. The electronic device of claim 2, wherein a second recess (440) is formed in the third portion (P3) of the second plate (350).

11. A speaker module (230) comprising:
a first plate (310);
a speaker (330) disposed in a second direction of the first plate (310);
a diaphragm (335) disposed in the second direction of the speaker (330);
a second plate (350) spaced apart from the diaphragm (335) and disposed in the second direction; and
an acoustic outlet (345) formed between the diaphragm (335) and the second plate (350),
wherein the second plate (350) comprises:
a first portion (P1) having a first gap (g1) from the diaphragm (335); and
a second portion (P2) having a second gap (g2) from the diaphragm (335), and
wherein the first portion (P1) is configured to have a smaller thickness than the second portion (P2).

12. The speaker module of claim 11, wherein the second plate (350) comprises a third portion (P3) having the first gap (g1) from the diaphragm (335).

13. The speaker module of claim 11 or 12, wherein an elastic member (450) is disposed in the second direction of the second portion (P2) of the second plate (350).

14. The speaker module of claim 11 or 12, wherein the diaphragm (335) comprises a first groove (410) formed in a portion facing the first portion (P1) of the second plate (350).

15. The speaker module of claim 12, wherein the diaphragm (335) comprises a second groove (420) formed in a portion facing the third portion (P3) of the second plate (350).
